# EUROPEAN PATENT SPECIFICATION

(11) **EP 3 956 124 B1**
(45) Date of publication and mention of the grant of the patent: **27.03.2024**
(21) Application number: 20723267.9
(22) Date of filing: 16.03.2020
(51) Int. Cl.: B29C 49/56, B29C 49/36, B29C 49/02, B29C 49/48, B29L 31/00

(54) **SYSTEM COMPRISING A LOCKING MECHANISM FOR A MOULDING DIE**
SYSTEM UMFASSEND EIN VERRIEGELUNGSMECHANISMUS FÜR EIN FORMWERKZEUG
SYSTÈME COMPRENANT UN MÉCANISME DE VERROUILLAGE POUR UNE MATRICE DE MOULAGE

(30) Priority: 19.04.2019 BG 11292019
(43) Date of publication of application: 23.02.2022
(73) Proprietor: Index- 6 Ltd, 4004 Plovdiv (BG)
(72) Inventor: YUSEIN, Erol Yusein, 4000 Plovdiv (BG); MINCHEV, Evgeni Ivanov, 4000 Plovdiv (BG); SPASOV, Petar Georgiev, 4000 Plovdiv (BG)
(74) Representative: Ilarionov, Pavko Jordanov
(86) International application number: PCT/BG2020/000013
(87) International publication number: WO 2020/210882

(56) References cited:
- EP-A1- 2 942 179
- EP-A1- 2 977 169
- CN-A- 108 127 897
- US-A1- 2012 161 349
- US-A1- 2014 151 940

## Description

### Field of the Invention

The invention relates to a locking mechanism for a moulding die, which will find application, in particular, in rotary blowing machines for production of containers (bottles) made of thermoplastic materials.

### Background of the Invention

In rotary blowing machines, a plurality of moulding dies are arranged radially around a central axis of rotation and the means for opening and closing the parts of each die are synchronized with the movement of other devices that interact with the rotary blowing machine.

Generally, a mould for production of thermoplastic bottles consists of three main parts - left and right half shells and a bottom. The left and right half shells are symmetrical and hinged so that they can rotate around their hinge to a certain angle. When closed, the three parts of the moulding die form a hollow, closed body, where the shape of the cavity determines the shape of the bottle being manufactured.

During the moulding of the preform, the fluid pressure, usually air, increases inside the preform and thus an opening force to its components is exerted inside the die, which can lead to the production of a defective bottle with a clearly visible line of separation between the left and right parts of the junction of the two semi-shells.

Locking mechanisms of the prior art are disclosed in CN 108 127 897 A, US 2012/161349 A1, EP 2 977 169 A1, US 2014/151940 A1.

A further locking mechanism in accordance with the preamble of claim 1 for a moulding die for production of plastic bottles, composed of three main parts - left and right half shells and a bottom, is disclosed in EP 2 942 179. The left and right half shells are symmetrical and mounted on a common axis so that they can rotate around their common axis to a certain angle, and the bottom is mounted in such a way, so it can perform reciprocating vertical movement.

On the two half shells externally, longitudinally, vertically and in parallel to their common pivot axis, are mounted supporting replaceable profiles. Each of the two replaceable supporting profiles is made with an external vertical rib. A rotatable locking element (movable lock), with a "C" profile facing the supporting profiles, is mounted pivotally on one of the two half shells. The "C" - shape profile of the movable lock engages and holds the two half shells of the die in closed position during the bottle moulding process.

In the lower part of the closing element is mounted a drive bearing, which interacts with a cam profile, so that the closing element is moving between the two end positions of the locking mechanism - open and closed. To assist the process, a spring is mounted to the closing element and one of the half shells.

In this construction, when the spring fails, the action of the entire locking mechanism is blocked and the production stops until the problem is eliminated.

The use of a single closing element along the entire length makes the construction heavy and slows down the speed of operation and productivity.

### Summary of the Invention

The present invention is defined by the features of claim 1.

The object of the present invention is to provide a locking mechanism for a moulding die with increased operational reliability and lightweight construction.

This task is accomplished by creating a locking mechanism for a molding die, in particular for a rotary blowing machine, consisting of at least one movable lock, a bearing operated by a cam and a spring.

The mechanism according to the present invention also includes a carrier, fixed externally and longitudinally to one of the half shells and a plate, positioned in parallel across to the carrier and fixed to the second half shell. Profiled safety holes are formed laterally in the plate.

A plurality of movable, "Γ"-shaped locks, having a clamping profile formed at their front end, are mounted on the carrier above each other. The movable locks are mounted axially in their rear end to the carrier and in their central part - to the control arm. The control arm is mounted in parallel to the carrier, so as to be able to reciprocate in the vertical direction of the molding die.

A bearing, operated by a cam, is mounted to the lower end of the control arm. The control arm is also movably installed in a fixing element, rigidly mounted to the first (left) half shell.

A support spring is secured at the one end by a clamp to the control arm and the other end of the spring is attached to the carrier at.

The main advantages of the invention are the following:
- in the present invention the movable locks are rotated in vertical direction, so that even if there is a broken spring, the mechanism can be closed from the weight of the arm;
- the number and the position of the locks is adapted to the load of the whole mechanism, i.e. different number of movable locks in different positions may be placed (the upper ones have to be closer to each other due to the higher load on the upper side of the assembly);
- the locking mechanism is lightweight, which makes it faster, due to its smaller mass;
- this mechanism has many locking points (multi-point locking) in several locations and even if one of the movable locks fails, the effort can be taken by the others (in emergency situations).

### Brief description of the drawings

**Fig. 1** shows an open molding die in axonometry;
**Fig. 2** is a top view of an open molding die;
**Fig. 3** is a perspective view of an open molding die with a locking mechanism;
**Fig. 4** is a front view of a locked molding die;
**Fig. 5** is a top view of a closed molding die;
**Fig. 6** shows a movable lock in closed position.

### Detailed description of the invention

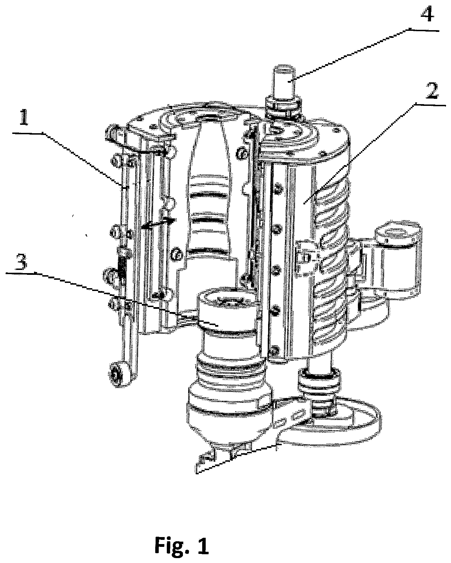

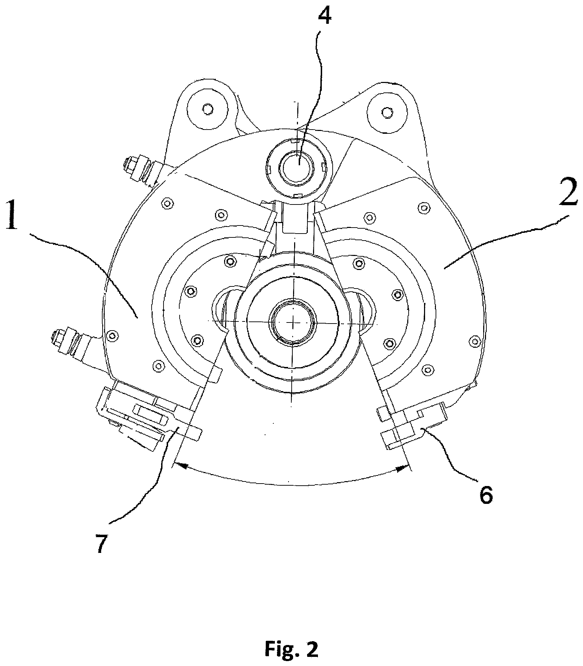

Generally, a molding die for production of thermoplastic bottles consists of three main parts - a first (to the left on the drawings) half shell 1, a second (right) half shell 2 and a bottom 3. The two half shells 1 and 2 are symmetrical and fitted on a common longitudinal axis 4, so that they can perform reverse rotation around their common axis 4 to a certain angle - **Fig. 1** **and** **Fig. 2****.**

Alternatively, one of the half shells may be stationary and the other one - movable.

The bottom 3 can reciprocate only vertically between the two half shells 1 and 2.

When closed, the three parts of the molding die form a hollow, closed body, where the shape of the formed cavity determines the shape of the bottle or container being manufactured.

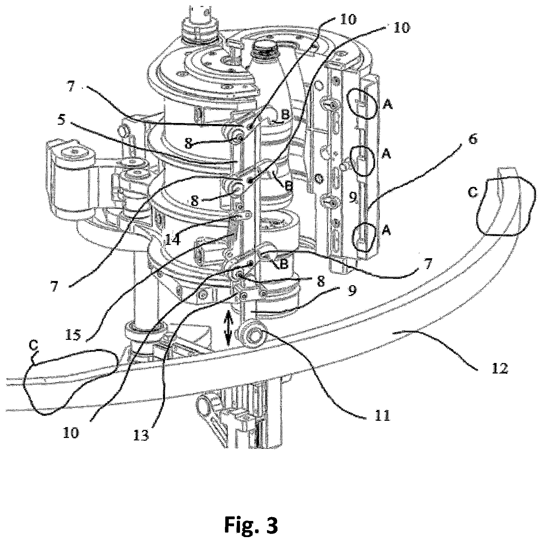

The locking mechanism (**Fig. 3**) consists of a carrier 5, fixed externally and longitudinally to one of the half shell - in this case, the first (left) half shell 1, and a plate 6, positioned against the carrier 5 and fixed to the second (right) half shell 2, whereby the plate 6 has profiled laterally, security openings - the zones, marked with "A".

The carrier 5 and the plate 6 are arranged in parallel to the axis 4 of the molding die.

A plurality of movable locks 7 are mounted to the carrier 5, which in their rear parts are fastened axially and movably to the carrier 5 through axes 8.

The movable locks 7 are "Γ" -shaped, whereby a gripping profile is formed at the front end of each of them - zone "B".

Each of the movable locks 7 is axially and movable attached in its central part to a control arm 9 by means of connecting axes 10. The control arm 9 is mounted in parallel to the carrier 5 and the plate 6 and performs a reciprocal movement on the vertical of the molding die.

At the lower end of the control arm 9 is mounted a bearing 11, operated by a cam 12. On the cam 12 are formed climbing and lowering zones "C".

In this case, the control arm 9 is movably installed in a fixing element 13, rigidly mounted to the left half shell 1. The fixing element 13 does not allow deviations of the control arm 9 in a direction, perpendicular to its reciprocating motion.

In one embodiment of the present invention, it is possible to mount a pneumatic or electric actuator to operate the control arm 9 instead of using the cam 12 and the bearing 11.

The one end of a support spring 15 is secured to the control arm 9 by a clamp 14, while the other end of the carrier spring 15 is secured to the carrier 5.

Laterally in the plate 6 are formed security openings - the profiles "A", which are counter profiles to the profiles "B" of the movable locks 7.

### Mode of operation

After placing a preform for forming containers into the moulding die and closing it, it is necessary to ensure a secure fixation of its parts in the closed position.

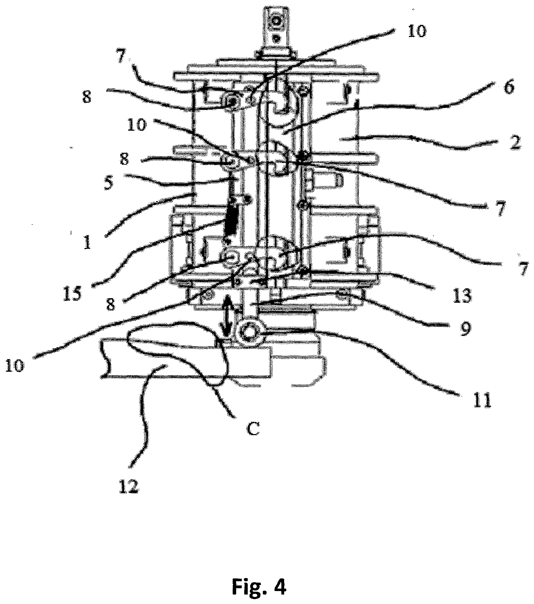

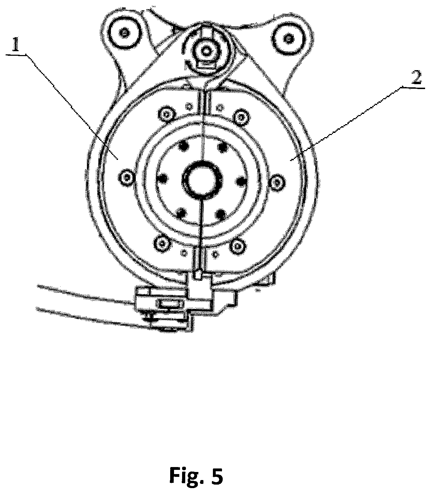

The sequence of the workflow is as follows:
- After the moulding die is closed, the locking mechanism secures the two movable half shells 1 and 2 - **Fig. 4** **and** **Fig. 5** by leading the movable locks 7, which in the present exemplary embodiment are three, arranged vertically one above the other, to the fixed plate 6.
- The control of the movable locks 7 is carried out by the control arm 9 to which the bearing 11 is attached, whereby the position of the bearing 11 is controlled by the cam 12 or by a pneumatic or electrical actuator for operating the control arm 9, as alternative embodiments.
- In the cam 12 are made ascending and descent zones "C", which zones provide the necessary run for propulsion in vertical axial direction of the movable control arm 9.
- The control arm 9 drives the movable locks 7, which rotate about the axes 8 and 10, so as to ensure the positioning and locking of the movable locks 7 in the profiles "A", made in the plate 6.
- The movement of the bearing 11 along the cam 12 is coordinated with respect to the bottles moulding cycle and the position of the plate 6. The guaranteed contact between the bearing 11 and the cam 12 is provided by a loaded support spring 15, which is always intended to keep the control arm 9 against the cam 12 in vertical positon "down".

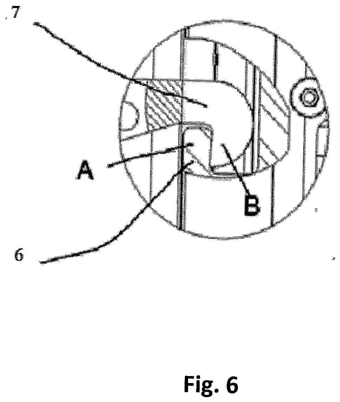

- **Fig. 6** shows the correct positioning of the locking mechanism - zones "A" and "B", oriented towards each other.
- In the stage of unlocking the mechanism, the principle is the same - a slope (zone "C"), made in the cam 12, raises the bearing 11, which in turn drives the control arm 9. This is followed by rotation of the movable locks 7 to unlocked position.

## Claims

1. A system comprising:
a first and a second half-shell, mounted on a common vertical central axis and
a locking mechanism for a moulding die, in particular for a rotary blowing machine, consisting of at least one movable lock, a bearing, operated by a cam, and a spring,
**characterized in that,**
the locking mechanism also includes a carrier (5), fixed externally and longitudinally to the first half shell (1) and a positioned in parallel across the carrier (5),
a plate (6), having security opening sideways and fixed to the second half shell (2),
whereby to the carrier (5) are mounted on top of one another a plurality of "Γ" shaped movable locks (7), having gripping profiles, formed at their front end, whereby the locks (7) are mounted at their rear ends axially and movably to the carrier (5) and at their central parts are attached to a control arm (9), which control arm is positioned in parallel to the carrier (5) and is capable of reciprocating in vertical direction of the moulding die, whereby at the lower end of the control arm (9) is mounted a bearing (11), controlled by a cam (12), where the control arm (9) is movably installed in a fixing element (13), fixed to the first half shell (1), while a supporting spring (15) is secured at one end to the control arm (9) and at the other end to the carrier (5).

## Patentansprüche

1. **System umfassend:**
eine erste und eine zweite Halbschale, die auf einer gemeinsamen vertikalen Mittelachse eingebaut sind, und einen Verriegelungsmechanismus für ein Formwerkzeug, insbesondere für eine rotierende Blasformmaschine, der mindestens einen beweglichen Riegel, ein Nockenbetätigter Lager und eine Feder umfasst,
**dadurch gekennzeichnet, dass**
der Verriegelungsmechanismus ferner einen Träger (5), der außen und in Längsrichtung an der ersten Halbschale (1) befestigt ist, und eine parallel zum Träger (5) angeordnete Platte (6) umfasst, die Sicherheitslöcher an den Seiten aufweist und an der zweiten Halbschale (2) befestigt ist, wobei eine Vielzahl von "Γ"-förmigen beweglichen Riegeln (9) mit an ihren vorderen Enden ausgebildeten Greifprofilen übereinander am Träger (5) angebracht sind, wobei die Riegel (9) an ihren hinteren Enden axial und beweglich am Träger (5) angebracht sind und an ihren mittleren Abschnitten an einem Steuerarm (9) befestigt sind, wobei der Steuerarm (9) parallel zum Träger (5) angeordnet ist und in der Lage ist, eine Hin- und Herbewegung in der vertikalen Richtung des Formwerkzeugs auszuführen, wobei ein durch einen Nocken (12) gesteuertes Lager (11) am unteren Ende des Steuerarms (9) angebracht ist, wobei der Steuerarm (9) beweglich in einem Befestigungselement (13) angebracht ist, das an der ersten Halbschale (1) befestigt ist, während eine Stützfeder (15) an dem einen Ende an dem Steuerarm (9) und am anderen Ende an dem Träger (5) befestigt ist.

## Revendications

1. **Un système comprenant:**
une première et une seconde demi-coquilles, montées sur un axe central vertical commun et un mécanisme de verrouillage pour une matrice de moulage, en particulier pour une machine de soufflage rotative, constitué d'au moins un verrou mobile, d'un palier actionné par une came et d'un ressort,
**caractérisé en ce que,**
le mécanisme de verrouillage comprend également un support (5), fixé extérieurement et longitudinalement à la première demi-coquille (1) et une plaque (6), disposée parallèlement au support (5), ayant un orifice de sécurité sur les côtés et fixée à la seconde demi-coquille (2), sur le support (5) étant montées l'une sur l'autre plusieurs serrures mobiles en forme de «Γ» (7), avec des profilés de préhension formés à leur extrémité avant, les serrures (7) étant montées à leurs extrémités arrière de manière axiale et mobile sur le support (5) et étant fixées à leurs parties centrales à un bras de commande (9), lequel bras de commande (9) est disposé parallèlement au support (5) et peut effectuer un mouvement de va-et-vient dans la direction verticale de la matrice de moulage, à l'extrémité inférieure du bras de commande (9) étant monté un roulement (11), commandé par une came (12), où le bras de commande (9) est monté de manière mobile dans un élément de fixation (13), fixé à la première demi-coquille (1), tandis qu'un ressort de soutien (15) est fixé par l'une de ses extrémités au bras de commande (9) et par l'autre au support (5).
